# EUROPEAN PATENT APPLICATION

(11) **EP 4 296 740 A1**
(43) Date of publication of application: **27.12.2023**
(21) Application number: 22180827.2
(22) Date of filing: 23.06.2022
(51) Int. Cl.: G02B 6/44

(54) **MODULAR FIBER OPTIC OUTLET**

(71) Applicant: Corning Research & Development Corporation, Corning, New York 14831 (US)
(72) Inventor: KRUK-KAMINSKA, Agnieszka Maria, Corning, 14831 (US); GAJEK, Max Wiktor, Corning, 14831 (US); URBANSKI, Krzysztof Piotr, Corning, 14831 (US)
(74) Representative: Reeve, Nicholas Edward

(57) **Abstract**

This application relates to a modular fiber optic outlet. The modular fiber optic outlet (100) comprises a base section (200), a splice section (300), and a cover section (400). The base section (200) comprises: a first side including one or more mounting elements (204); a second side opposing the first side, said second side comprising a plurality of connection elements (206) configured for receiving the splice section (300); and an inlet (202) for receiving a fiber optic cable (500). The splice section (300) comprises: a first side comprising a first plurality of connection elements (308) configured for coupling to the base section (200); a second side opposing the first side, said second side comprising a second plurality of connection elements (310) configured for receiving the cover section (400); an adapter mount area (304) configured for receiving one or more fiber optic adapters (550); and a splicing area (302). The first plurality of connection elements (308) of the splice section (300) are configured to couple to the plurality of connection elements (206) of the base section (200) in two or more configurations, each configuration having a different orientation between the splice section (300) and the base section (200).

## Description

### TECHNICAL FIELD

This application relates to modular fiber optic outlet and a method of installation of the modular fiber optic outlet. In particular, this application relates to a modular fiber optic wall outlet with rotatable modules.

### BACKGROUND ART

Wall outlets are commonly used in end customer premises to provide a means for connecting to a network, usually via a socket in the wall outlet into which a customer cable or similar is connected. In the case of fiber optics, wall outlets are used in the FTTx (fiber to the to the premises/home/building/cabinet/node) part of the network to connect the end customer to the optical network. Typically, these fiber optical wall outlets are installed inside the customer's home, apartment, business premises or the like.

There is a constant and rapid development of FTTx markets worldwide, particularly fiber to the home (FTTH) markets. There is a broad market need for high speed internet connections, which are implemented via wall terminals installed in homes/customer premises. There is a constant demand for said wall outlets to provide more connections, easier access, increased adaptability, shorter installation processes and a decreased cost of materials and installation.

We have appreciated that it would be desirable to provide an improved wall outlet, with increased versatility and ease of installation.

### SUMMARY OF THE INVENTION

The invention is defined by the independent claims, to which reference should now be made. Advantageous features are set out in the dependent claims.

According to a first aspect of the invention, a modular fiber optic outlet is provided. The modular fiber optic outlet comprises a base section, a splice section, and a cover section. The base section comprises: a first side including one or more mounting elements; a second side opposing the first side, said second side comprising a plurality of connection elements configured for receiving the splice section; and an inlet for receiving a fiber optic cable. The splice section comprises: a first side comprising a first plurality of connection elements configured for coupling to the base section; a second side opposing the first side, said second side comprising a second plurality of connection elements configured for receiving the cover section; an adapter mount area configured for receiving one or more fiber optic adapters; and a splicing area. The first plurality of connection elements of the splice section are configured to couple to the plurality of connection elements of the base section in two or more configurations, each configuration having a different orientation between the splice section and the base section.

Optionally, the cover section comprises a first side having plurality of connection elements configured for coupling to the splice section; and the plurality of connection elements of the cover section are configured to couple to the second plurality of connection elements of the splice section in two or more configurations, each configuration having a different orientation between the cover section and the splice section.

Optionally, the plurality of connection elements of the base section and the first plurality of connection elements of the splice section each possess n-fold rotational symmetry about an axis normal to the respective side of that section; and/or the second plurality of connection elements of the splice section and the plurality of connection elements of the cover section each possess n-fold rotational symmetry about an axis normal to the respective side of that section.

Optionally, the plurality of connection elements of the base section are also configured for receiving the cover section; and/or the second plurality of connection elements of the splice section are also configured for receiving an additional splice section.

Optionally, the base section and splice section each include an outer peripheral wall enclosing a volume between the first and second sides.

Optionally, the outer peripheral walls of the base section and the splice section have the same shape perimeter, preferably a circular or rotationally symmetric polygon shape.

Optionally, the cover section is planar and has the same shape perimeter as the outer peripheral walls of the base section and the splice section.

Optionally, the splice section further comprises a partitioning wall disposed between the first and second sides; the splicing area is disposed on the surface of the partitioning wall towards the first side of the splice section; the adapter mount area is disposed on the surface of the partitioning wall towards the second side of the splice section; and the partitioning wall includes one or more through-holes for allowing one or more fiber optic cables to travel from the splicing area to the adapter mount area.

Optionally, the splice section further comprises one or more fiber optic pigtails connected to fiber optic adapters pre-installed in the adapter mount area.

Optionally, the base section further comprises an adapter mount area configured for receiving one or more fiber optic adapters.

Optionally, the base section and/or splice section include one or more cable guide elements and/or cable retaining elements.

Optionally, the pluralities of connection elements include one or more of: snap-fits, clips, screws, pins, shafts or bores.

According to a second aspect of the invention, a base section for a modular fiber optic outlet is provided. The base section comprises: a first side including one or more mounting elements; a second side opposing the first side, said second side comprising a plurality of connection elements configured for receiving a splice section or a cover section; an inlet for receiving a fiber optic cable; wherein the plurality of connection elements are configured to couple to the splice section or cover section in two or more configurations, each configuration having a different orientation between the base section and the splice section or cover section.

According to a third aspect of the invention, a splice section for a modular fiber optic outlet is provided. The splice section comprises: a first side comprising a first plurality of connection elements configured for coupling to a base section; a second side opposing the first side, said second side comprising a second plurality of connection elements configured for receiving a cover section or an additional splice section; an adapter mount area suitable for receiving one or more fiber optic adapters; and a splicing area; wherein the first plurality of connection elements are configured to couple to the base section in two or more configurations, each configuration having a different orientation between the splice section and the base section.

According to a fourth aspect of the invention, a method of installation of a modular fiber optic outlet according to the first aspect is provided. The method comprises: performing, by a first person, the steps of: mounting the base section onto a surface via the one or more mounting elements; inserting a fiber optic cable into the inlet in the base section; optionally, coupling the cover section on to the base section. The method also comprises: performing, by the first person or by a second person, the steps of: optionally, removing the cover section from the base section; splicing one or more optical fibers from the fiber optic cable with one or more fiber optic pigtails connected to fiber optic adapters installed in the adapter mount area; coupling the splice section on to the base section; and coupling the cover section on to the splice section.

### BRIEF DESCRIPTION OF THE DRAWINGS

Embodiments of the invention will now be described in relation to the accompanying drawings, in which:
Figure 1a shows a perspective view of a modular fiber optic outlet according to an embodiment of the present invention;
Figure 1b shows an exploded view of the modular fiber optic outlet of Figure 1a;
Figure 2 shows a front view of a base section of the modular fiber optic outlet of Figures 1a and 1b;
Figure 3a shows a rear view of a splice section of the modular fiber optic outlet of Figures 1a and 1b;
Figure 3b shows a front view of a splice section of the modular fiber optic outlet of Figures 1a and 1b;
Figure 4a shows a rear view of a cover section of the modular fiber optic outlet of Figures 1a and 1b;
Figure 4b shows a front view of a cover section of the modular fiber optic outlet of Figures 1a and 1b;
Figure 5a shows four different configurations of a modular fiber optic outlet according to an embodiment of the present invention;
Figure 5b shows four different configurations of a modular fiber optic outlet according to an embodiment of the present invention with the cover section removed;
Figure 6 shows an arrangement of the modular fiber optic outlet including just the base section and the cover section.

### DETAILED DESCRIPTION

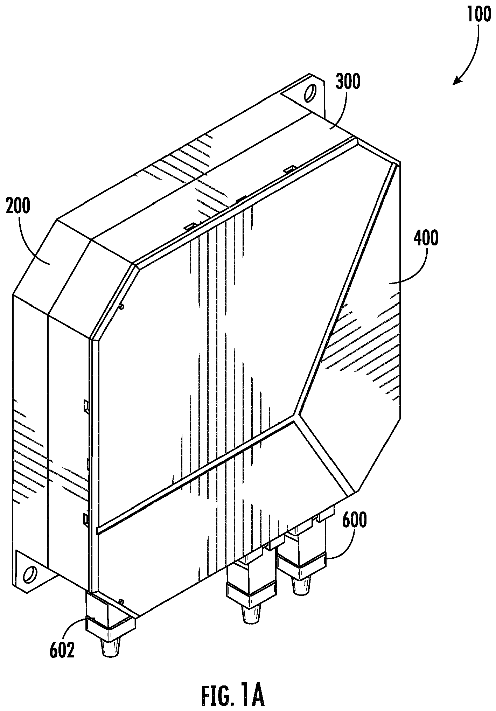

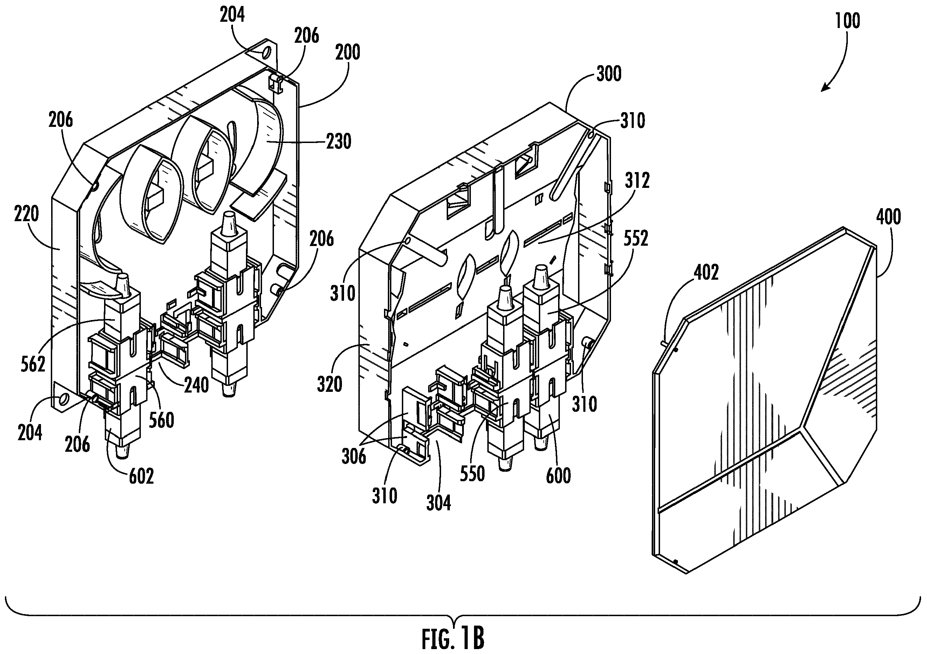

Figures 1a and 1b show perspective and exploded views of a modular fiber optic outlet 100 according to an embodiment of the present invention. The modular fiber optic outlet may also be referred to as a wall outlet, a fiber optic outlet, a wall terminal, a fiber optic wall outlet, a wall terminal assembly, or the like.

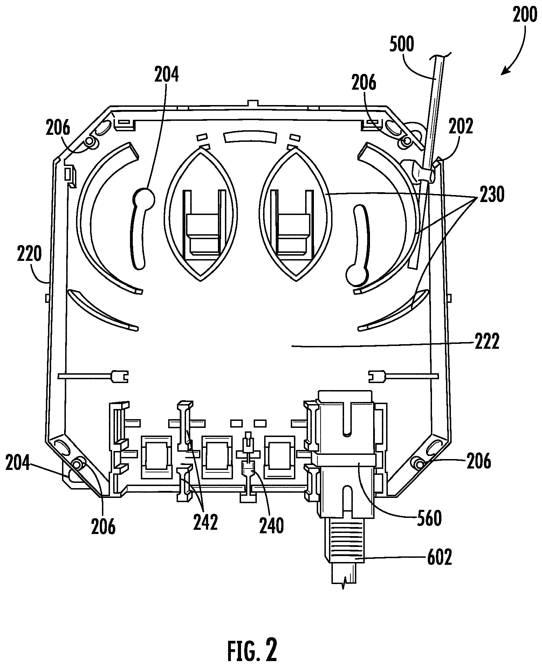

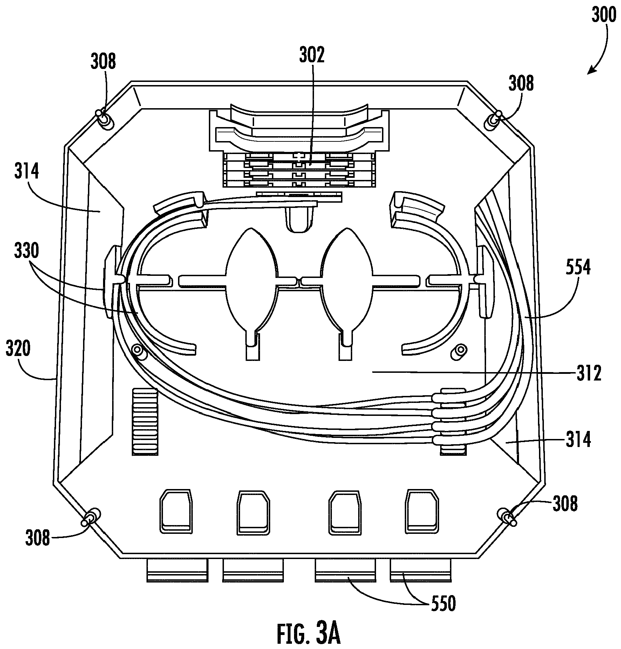

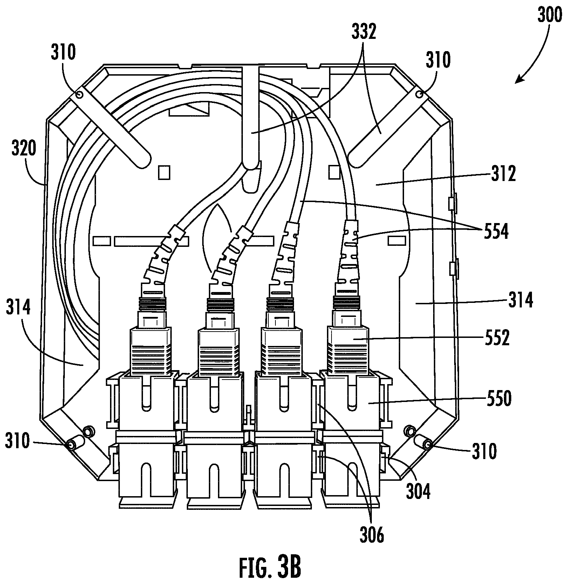

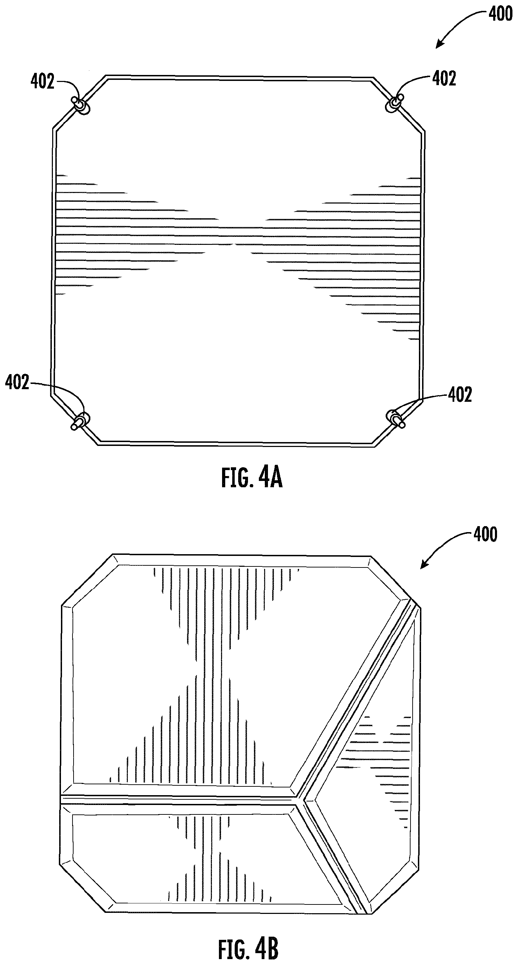

The modular fiber optic outlet 100 comprises a base section 200, a splice section 300, and a cover section 400, which couple together to form the fiber optic outlet 100. Figure 2 shows a front view of the base section 200 of the modular fiber optic outlet 100 of Figures 1a and 1b. Figure 3a shows a rear view of the splice section 300 of the modular fiber optic outlet 100 of Figures 1a and 1b. Figure 3b shows a front view of the splice section 300 of the modular fiber optic outlet 100 of Figures 1a and 1b. Figures 4a and 4b show rear and front views respectively of the cover section 400 of the modular fiber optic outlet 100 of Figures 1a and 1b. Each of these sections constitutes one of the modules of the modular fiber optic outlet 100, and are rotatable with respect to each other, as will be outlined in more detail below.

The base section 200 comprises a first side and a second side opposing the first side. Figure 2 shows the second side (front side) of the base section 200. The splice section 300 also comprises a first side and a second side opposing the first side. Figure 3a shows the first side (rear side) of the splice section 300, and Figure 3b shows the second side (front side) of the splice section 300.

The first side of the base section 200 includes one or more mounting elements 204. The mounting elements 204 are configured for mounting/installing the base section 200 to a desired surface, such as a wall. The base section 200 may be mounted (installed) directly on a wall, or on flush-mounted boxes, or on DIN rails including those inside a fiber optic cabinets. The mounting elements 204 may allow a flush mounting of the base section 200 onto the wall. Alternatively, the mounting elements 204 may be configured for connection to a DIN rail. Implementing DIN rail fixing geometries in the mounting elements 204 provides installation flexibility both onto a wall and onto a DIN rail. The mounting elements 204 may be holes in the first side of the base section 200 through which a screw or the like engage in order to hold the base section 200 to the DIN rail or to the wall.

Both the base section 200 and the splice section 300 provide a volume for storing fiber optical cables and optical fibers, and/or making one or more optical connections between said optical fibers, such as but not limited to splice connections.

In particular, the base section 200 includes an inlet 202 (shown in Figure 2, omitted in Figures 1a and 1b) for receiving a fiber optic cable 500, such as a fiber optic feeder cable. In the embodiment shown in Figure 2, the inlet 202 is located in the top right corner of the base section 200. However, the inlet can be positioned at any location in the base section 200, such that a fiber optic cable 500 may enter the base section 200 from any direction. The fiber optic cable 500 may include one or more optical fibers which are housed within and pass through the volume of the base section 200 (not shown in Figures 1a, 1b or 2).

The splice section 300 includes a splicing area 302, and an adapter mount area 304 configured for receiving one or more fiber optic adapters 550. In the splicing area 302 the one or more optical fibers of the fiber optic feeder cable 500 can each be connected via splicing to a fiber optic connector 552. Each fiber optic connector 552 can then engage with a fiber optic adapter 550 held in the adapter mount area 304. For example, at the splicing area 302, each optical fiber in the fiber optic cable 500 can be splice connected to a fiber optic pigtail 554 (which includes the fiber optic connector 552), and the pigtail 554 may then be mated with the fiber optic adapter 550 in the adapter mount area 304. Such pigtails 554 are shown installed in Figures 3a and 3b.

The splicing area 302 provides a means for the optical fibers to be fixed down onto the splice section 300 to both protect the spliced sections and prevent entanglement of the optical fibers. For example, the splicing area 302 may include one or more support structures suitable for supporting the spliced sections of the optical fibers.

The adapter mount area 304 provides a means for holding or gripping the fiber optic adapters 550, and therefore fiber optic connectors 552 to which the fiber optic feeder cable 500 is to be connected (via the splicing area 302). In the present embodiment, four fiber optic adapters 550 are included, however the adapter mount area 304 may be configured for holding any number and arrangement of fiber optic adapters. The one or more fiber optic adapters 550 may be held in place by various means. In the present embodiment, the one or more fiber optic adapters 550 are seated into one or more seating elements 306, which hold the one or more fiber optic adapters 550 in the desired location. Figure 3b shows four fiber optic adapters 550 and connectors 552 installed in the splice section 300, and Figure 1b shows two installed fiber optic adapters 550 and connectors 552 in the splice section 300.

Once the modular fiber optic outlet 100 is fully installed, an outgoing (customer) fiber optic cable may be connected to (mated with) each of the fiber optic adapters 550 held within the adapter mount area 304. The one or one or more fiber optic adapters 550 therefore provide a number of connection points into the fiber optic outlet 100. When installed, the customer can plug in customer cables into each of the fiber optic adapters 550, which therefore connects the customer cables to the fiber optic network via the splicing area 302 and the fiber optic feeder cable 500. The one or more seating elements 306 fix the one or more fiber optic adapters 550 in place to facilitate the customer plugging in/unplugging one or more customer cables to/from the one or more fiber optic adapters 550 in order to connect to/disconnect from the fiber optic network. Exemplary fiber optic connectors 600 from customer cables are shown in Figure 1b plugged into the fiber optic adapters 550 held in the adapter mount area 304 of the splice section 300.

The base section 200, splice section 300, and cover section 400 couple together as shown in Figure 1a. Specifically, the second side of the base section 200 comprises a plurality of connection elements 206 configured for receiving the splice section, and the first side of the splice section 300 comprises a first plurality of connection elements 308 configured for coupling to the base section 200. In other words, the plurality of connection elements 206 of the base section 200 are complimentary to, and configured to engage with, the first plurality of connection elements 308 of the splice section 300. When the modular fiber optic outlet 100 is constructed, the plurality of connection elements 206 of the base section 200 couple to the first plurality of connection elements 308 of the splice section 300 to attach the splice section 300 the base section 200.

The first plurality of connection elements 308 of the splice section 300 are configured to couple to the plurality of connection elements 206 of the base section 200 in two or more configurations, each configuration having a different orientation between the splice section 300 and the base section 200. In other words, the splice section 300 can attach to the base section 200 in multiple orientations, each orientation having the splice section 300 rotated by different amounts with respect to the base section 200.

For example, in the present embodiment, the base section 200 includes four connection elements 206 located at four corners of the second side of the base section 200, and the splice section 300 includes four complimentary connection elements 308 located at four corners of the first side of the splice section 200. The connection elements 206,308 have 4-fold rotational symmetry about an axis normal to the respective side of that section. The splice section 300 may therefore be coupled to the base section 200 in four different orientations (configurations), with the splice section rotated by 90° between each different coupling whilst the orientation of the base section 200 remains unchanged.

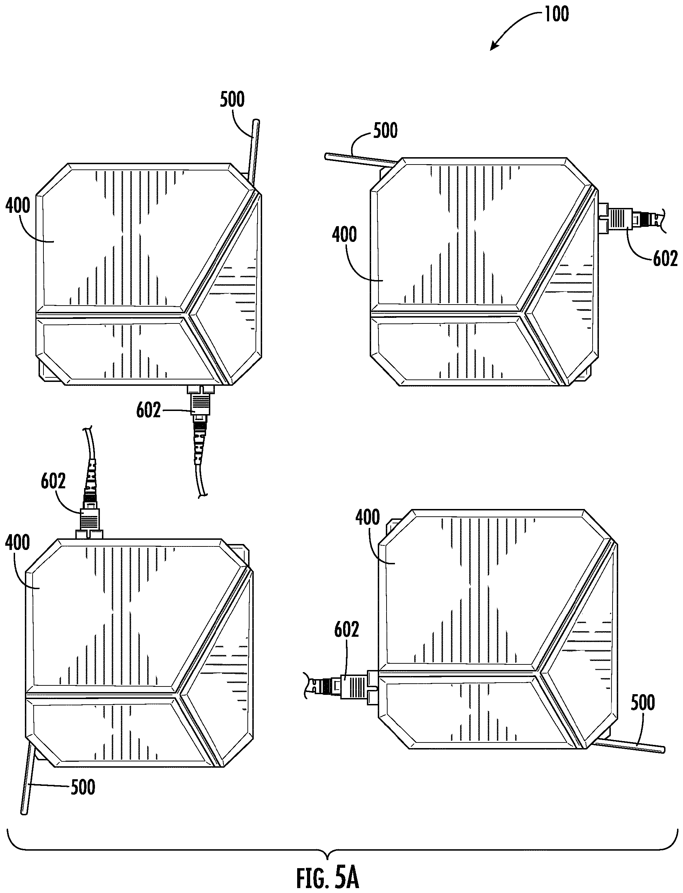

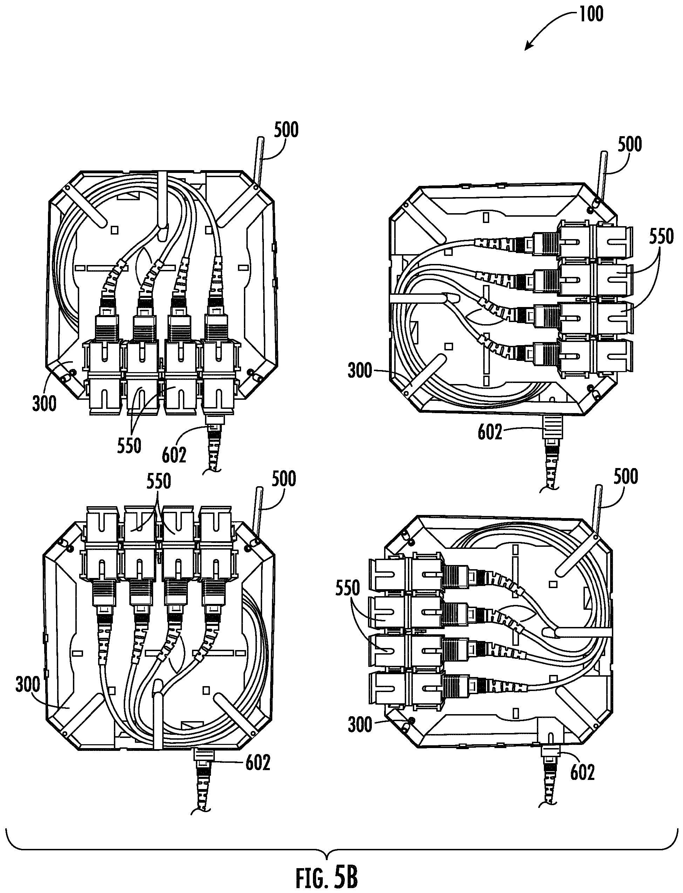

Although each of the plurality of connection elements 206 and first plurality of connection elements 308 include four connection elements in the present embodiment, in general any number of connection elements may be used. If the number of connection elements 206,308 on each of the base section 200 and splice section 300 is equal to n, then the plurality of connection elements 206 of the base section 200 and the first plurality of connection elements 308 of the splice section 300 must each possess n-fold rotational symmetry about an axis normal to the respective side of that section. In other words, each of the n connection elements must be equally spaced around the periphery of the base/splice section. This rotational symmetry of the connection elements allows the splice section 300 to couple to the base section 200 in n different orientations. The advantages of this construction will be discussed in relation to Figures 5a and 5b later.

Various different connecting means may be used as the plurality of connection elements 206 and first plurality of connection elements 308. For example, the pluralities of connection elements 206,308 may include any of: snap-fits, clips, screws, pins, or the like. Preferably the pluralities of connection elements 206,308 are snap-fits such that the splice section 300 and base section 200 can be rapidly "clicked" together. Alternatively, as pictured in Figures 1 to 3b, the connection elements 206,308 may be formed from shafts extending from one of the base or splice sections, and bores included in the other section, with the shafts having a diameter slightly larger than the bores, such that the shafts can be inserted into the bores and gripped by the bores. This configuration of shafts and bores creates a push-fit connection between the splice section 300 and the base section 200.

In addition, the second side of the splice section 300 comprises a second plurality of connection elements 310 configured for receiving the cover section 400. The cover section 400 has first and second opposing sides. The first side (rear side) is shown in Figure 4a and the second side (front side) is shown in Figure 4b. The first side includes plurality of connection elements 402 configured for coupling to the splice section. In other words, the second plurality of connection elements 310 of the splice section 300 are complimentary to, and configured to engage with, the plurality of connection elements 402 of the cover section 400. When the modular fiber optic outlet 100 is constructed, the plurality of connection elements 402 of the cover section 400 couple to the second plurality of connection elements 310 of the splice section 300 to attach the cover section 400 to the splice section 300.

The plurality of connection elements 402 of the cover section 400 and the second plurality of connection elements 310 of the splice section 300 may be any of the different connecting means described above for the connection elements 206,308, such as snap-fits, clips, screws, pins, shafts and bores or the like.

The interaction between the plurality of connection elements 402 and the second plurality of connection elements 310 is analogous to the interaction between the plurality of connection elements 206 and the first plurality of connection elements 308. Namely, the plurality of connection elements 402 of the cover section 400 are configured to couple to the second plurality of connection elements 310 of the splice section 300 in two or more configurations, each configuration having a different orientation between the cover section 400 and the splice section 300.

Again, in the present embodiment, the cover section 400 includes four connection elements 402 located at four corners of the first side of the cover section 400, and the splice section 300 includes four connection elements 310 located at four corners of the second side of the splice section 300, both having a 4-fold rotational symmetry. This means that the cover section 400 can attach to the splice section 300 in four different orientations (configurations) with the cover section 400 rotated by 90° in each case.

In general, n complimentary connection element pairs may be included in the plurality of connection elements 402 and the second plurality of connection elements 310, with an n-fold rotational symmetry about an axis normal to the respective side of that section, allowing the cover section 400 to couple to the splice section 400 in n different orientations. The advantages of this construction will be discussed in relation to Figures 5a and 5b later.

As mentioned, each of the base section 200 and splice section 300 define a volume for containing and splicing the various optical fibers and fiber optic adapters and connectors. In the present embodiment, the base section 200 includes an outer peripheral wall 220 enclosing the volume between the first and second sides of the base section 200. The splice section 300 also includes an outer peripheral wall 320 enclosing the volume between the first and second sides of the splice section 300. The outer peripheral walls 220,320 of the base section 200 and the splice section 300 have the same shape perimeter, such that when the splice section 300 is coupled to the base section 200 the outer peripheral walls 220,320 fully overlap to form a combined outer peripheral wall, as shown in Figure 1a.

In the present embodiment, the cover section 400 is a planar, flat plate, and has the same shape perimeter as the outer peripheral walls 220,320 of the base section 200 and the splice section 300. This means that when the cover section 400 is coupled to the splice section 300, the perimeter of the cover section 400 and the perimeter of the outer peripheral wall 320 of the splice section 300 fully overlap. Therefore, when the base section 200 is mounted to a wall or the like, and is coupled to the splice section 300 and the cover section 400, the volume within the modular fiber optic outlet 100 is fully enclosed by the outer peripheral walls 220,320, the cover section 400, and the wall to which the fiber optic outlet 100 is mounted. In other words, the modular fiber optic outlet 100 forms a closed box. Therefore all optical fibers and connections within the base section 200 and splice section 300 are protected by the fully constructed fiber optic outlet 100.

Optionally, the base section 200 may include a back plate 222 to enclose the volume within the fiber optic outlet 100. In this case, the mounting elements 204 may be included in the back plate 222. Alternatively, the wall to which the base section 200 is mounted may perform the role of the back plate, as described above.

Preferably, the perimeter of the outer peripheral walls 220,320 and cover section 400 has a circular or rotationally symmetric polygon shape. In the present embodiment, the perimeter is an irregular octagonal shape with 4-fold rotational symmetry. This irregular octagonal shape has the benefit that the footprint of the fiber optic outlet is reduced 100 (compared to the equivalent square shaped outlet without the corners removed). Other regular or irregular polygon shapes may also be used. In general, any shape possessing at least 2-fold rotational symmetry may be used as the shape of the perimeter of the outer peripheral walls 220,320 and cover section 400. The consequence of the shape of the perimeter will be discussed in more detail in relation to Figures 5a and 5b later.

In some embodiments, the inlet 202 may be located in the outer peripheral wall 220 of the base section 200. Optionally, the outer peripheral wall 220 may include one or more weakened portions which can be punched out by the user to create the inlet 202 at the desired location. The weakened portions may be located in a rotationally symmetric fashion around the base section 200, such as in the four corners as shown in Figure 2.

Optionally, the splice section 300 may be partitioned to include multiple compartments. For example, in the present embodiment, the splice section 300 includes a partitioning wall 312 disposed between the first and second sides of the splice section 300. The partitioning wall 312 extends in parallel to the first and second sides of splice section 300 and divides the volume between the first and second sides of the splice section 300.

In the present embodiment, the splicing area 302 is disposed on the rear surface of the partitioning wall 312 (the surface located towards the first side of the splice section 300), and the adapter mount area 304 is disposed on the front surface of the partitioning wall 312 (the surface towards the second side of the splice section 300). The partitioning wall 312 then includes one or more through-holes 314 for allowing one or more fiber optic cables to travel from the splicing area 302 through the partitioning wall 312 to the adapter mount area 304. In the present embodiment, there are two through-holes 314, located on opposing edges of the device, proximate to the outer peripheral wall 320. Fiber optic cables traveling from the splicing area 302 to the adapter mount area 304 through the through-holes 314 can connect the fiber optic connectors 552 and adapters 550 to the splicing area 302, and therefore to the one or more optical fibers of the fiber optic cable 550. The fiber optic cables traveling from the splicing area 302 to the adapter mount area 304 may be the fiber optic pigtails 554 as described above.

Preferably, one or both of the base section 200 and the splice section 300 include one or more cable guide elements 230,330 within their internal volume. The cable guide elements 230,330, also referred to as cable routing features, are configured to route optical fibers/cables through the fiber optic outlet 100, as well as to provide storage for cable slack. The cable guide elements 230,330 may include one or more bend radius protectors configured to enable a change in the direction of the routing of an optical fiber/cable while ensuring that the optical fiber/cable does not exceed a minimum bend radius. The minimum bend radius may be predetermined to limit or prevent damage to the optical fiber/cable or signal attenuation due to excessive bend radii.

Preferably, one of both of the base section 200 and the splice section 300 include one or more cable retaining elements 332. In the present embodiment, the cable retaining elements 332 are present in the splice section 300 (shown in Figure 3b), and are omitted in the base section 200. The cable retaining elements 332 may be retaining tabs that maintain the optical fibers/cables within the internal volumes between the first and second sides of the base section 200 or splice section 300. The cable retaining elements 332 may include one or more projections that are substantially parallel with the first and second sides of the base/splice section. The projections may extend from the outer peripheral walls 220,320 and/or cable guide elements 230,330. The cable retaining elements 332 limit or prevent uncoiling of the routed optical fiber/cable.

Optionally, the base section 200 may also include an adapter mount area 240. The adapter mount area 240 is analogous to the adapter mount area 304 of the splice section 300, and is configured for receiving and gripping one or more fiber optic adapters 560 via one or more seating elements 242.

When the adapter mount area 240 is included in the base section 200, optical fibers from the incoming fiber optic cable 500 may be connected to fiber optic connectors 562, and these fiber optic connectors 562 may be plugged into the fiber optic adapters 560 held in the adapter mount area 240. A customer can then plug in a customer cable (i.e. customer fiber optic connectors 602) into each of the fiber optic adapters 550, which therefore connects the customer cables to the fiber optic network via the incoming fiber optic feeder cable 500.

In some embodiments, the fiber optic connectors 562 (that are plugged into the fiber optic adapters 560 held in the adapter mount area 240) may be connected to optical fibers of the incoming fiber optic cable 500 via splicing. This splicing may be performed using the splicing area 302 of the splice section 300. Alternatively, this splicing may be performed using a different splicing area included in the base section 200 itself (not shown in the Figures). In some embodiments, said splicing area included in the base section 200 may be formed from a self-adhesive splice organizer that can be attached to the back plate 222 of the base section 200. For example, looking at Figure 2, a self-adhesive splice organizer may be attached to the back plate 222 directly above the adapter mount area 240, preferably above the central two sections of the adapter mount area 240 where the central two fiber optic adapters 560 can be held.

Alternatively, one or more optical fibers of the incoming fiber optic cable 500 may be pre-connectorized for mating to the fiber optic adapters 560 held in the adapter mount area 240, such that it is not necessary to splice the incoming fiber optic cable 500 to the fiber optic connectors 562 (splicing may still be performed for the fiber optic connectors 552 in the splice section 300).

In the present embodiment, four fiber optic adapters 560 may be included in the adapter mount area 240 of the base section 200. However, the adapter mount area 240 may be configured for holding any number and arrangement of fiber optic adapters. Figure 1b shows two fiber optic adapters 560 and connectors 562, as well as two exemplary customer fiber optic connectors 602 plugged into the fiber optic adapters 560. All fiber optical fibers/cables are omitted from Figure 1b for clarity. Figure 2 shows a single fiber optic adapter 560 installed in the adapter mount area 240 and connected to an exemplary customer optical fiber connector 602. Again, all optical fibers, i.e. those from the incoming fiber optic cable 500, are omitted in Figure 2 for clarity.

Including the additional adapter mount area 240 in the base section 200 provides an even more versatile device, and provides additional connection points for customer cables. In the embodiments shown in the Figures, up to eight customer cables may be plugged into the fiber optic outlet 100, four via the fiber optic adapters 550 of the splice section 300, and four via the fiber optic adapters 560 of the base section 200.

Although the various fiber optic connectors 552,562,600,602 and fiber optic adapters 550,560 and fiber optic cables/optical fibers are shown in the Figures, it is to be understood that these components do not necessarily form part of the modular fiber optic outlet 100, but are instead installed into the fiber optic outlet 100 (typically by a technician) upon installation at the customer premises.

In some embodiments, the splice section 300 may be provided with the fiber optic pigtails 554 and fiber optic connectors 552 connected to fiber optic adapters 550 pre-installed in the adapter mount area 304 (as shown in Figures 3a and 3b). In other words, the splice section 300 may be provided with the pigtails 554 prepared for splicing to the optical fibers of the fiber optic feeder cable 500. Having pre-installed pigtails provides efficiency advantages during installation of the fiber optic outlet 100, as will be discussed in more detail later.

The modular fiber optic outlet 100 described above fulfils all functionalities of known fiber optic wall outlets, such as splicing and connectorizing multiple optical fibers, within a compact structure. Moreover, the modular fiber optic outlet 100 allows for rotatability of the different modules thanks to the rotational symmetry of each section and of the connection interfaces (connection elements 206,308,310,402).

For example, Figure 5a shows four different configurations of a modular fiber optic outlet 100 according to an embodiment of the present invention. As shown by the fiber optic cable 500 and customer fiber optic connector 602 shown in Figure 5a, the base section 200 is mounted to the wall in four different orientations in Figure 5a. The top left drawing in Figure 5a has the base section 200 in the orientation shown in Figure 2, the top right drawing has the base section 200 rotated by 90° anticlockwise, the bottom left drawing has the base section 200 rotated by 180° anticlockwise, and bottom right drawing has the base section 200 rotated by 270° anticlockwise.

Mounting the base section 200 in each orientation provides increased versatility of the modular fiber optic outlet 100, as the fiber optic adapters 560 (when the adapter mount area 240 is present in the base section 200) may be oriented in any of the four directions, as shown in Figure 5a by the customer connector 602, so as to receive the customer connector 602 in the desired orientation. Moreover, the fiber optic feeder cable 500 may enter the base section 200 from any direction, as discussed previously, further improving the adaptability and versatility of the device. In Figure 5a the fiber optic cable 500 always enters the base section 200 on the opposite edge to the customer connector 602, however the fiber optic cable 500 may enter in different positions and orientations relative to the customer connector 602.

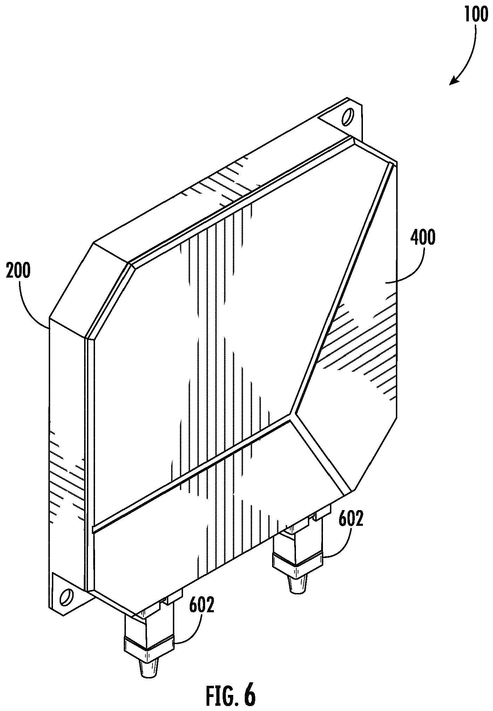

Furthermore, due to the rotational symmetry of the connection elements, in this case the 4-fold rotational symmetry, the cover section 400 can be installed in four different orientations with respect to the base section 200. In each case shown in Figure 5a, the cover section 400 is coupled to the base section 200 (either directly, as discussed in relation to Figure 6 below, or via the splice section 300 which is hidden by the cover section 400 in Figure 5a) such that the cover section 400 maintains the same orientation in Figure 5a. In other words, regardless of the orientation of the base section 200, the cover section 400 can be installed in a manner that preserves its appropriate orientation. This case be beneficial for a number of reasons, including ensuring written instructions, warnings, or manufacturer's branding is always positioned correctly oriented so that it can be read by a user.

The modular fiber optic outlet 100 therefore provides a versatile outlet which can be configured to allow both the fiber optic cable 500 and the customer connectors 602 to enter the base section in any the four orientations, whilst retaining the correct orientation of the cover section when the base section 200 is installed onto a wall.

Moreover, Figure 5b shows four different configurations of the modular fiber optic outlet 100 with the cover section 400 removed. As can be seen in Figure 5b, the base section 200 is mounted to the wall in the same orientation in each of the four configurations shown (as indicated by the fiber optic cable 500 and the customer connector 602 staying in the same positions). However, the splice section 300 is coupled to the base section 200 in four different orientations in the four configurations shown, with the splice section 300 rotated by 0°, 90°, 180° and 270° with respect to the base section 200 in the four configurations shown. This provides the user with an almost unlimited flexibility in terms of which direction the cables enter the fiber optic outlet. The base section 200 may be mounted to the wall in any of the four orientations shown in Figure 5a, to allow customer fiber optic connecters 602 to connect to fiber optic adapters 560 (if present) in the base section 200 in any of the four orientations (i.e. from the bottom edge, right hand edge, left hand edge, or top edge when mounted on the wall). The splice section 300 can then couple to the base section 200 in any of the four orientations shown in Figure 5b, to allow the customer fiber optic connecters 600 to plug into the fiber optic adapters 550 in the adapter mount area 304 of the splice section 300 in any of the four directions, regardless of the mounting orientation of the base section 200. Lastly, the cover section 400 may then be coupled to the splice section 300 with the cover section in the correct (vertical) orientation, as shown in Figure 5a, regardless of the orientation of the base section 200 or the splice section 300. The modular fiber optic outlet 100 therefore provides an outlet in which cable access is improved, and can be customized an adapted to any desired configuration, whilst preserving the external orientation of the cover section 400.

In short, in the present embodiment, eight optical fiber adapters 550,560 may be located on any one edge of the outlet 100 when mounted on the wall, with the cover section 400 reaming in the vertical orientation, or four optical fiber optic adapters can be located on each of any two of the edges of the outlet 100 when mounted on the wall, with the cover section 400 reaming in the vertical orientation.

The above described advantages result from the rotational symmetry of the connection elements 206,308,310,402. In general, an n-fold rotational symmetry of the connection elements results in n possible orientations (configurations) for mounting the base section 200 the wall, and n orientations for mounting the splice section 300 to the base section, whilst retaining the correct orientation of the cover section 400.

In the case of base sections 200 and splice sections 300 having the above described outer peripheral walls 230,330, the rotational symmetry of the perimeter of the outer peripheral walls 230,330 is also important. The rotational symmetry of the shape of the outer perimeter must compliment the n-fold rotational symmetry of the connection elements in order for the outer peripheral walls 230,330 to correctly fully overlap in each configuration (orientation). For example, in the present embodiment the irregular octagonal shaped perimeter has a 4-fold rotational symmetry, which means that the connection elements must have a 2-fold or a 4-fold rotational symmetry, to ensure that the outer peripheral walls 230,330 of the base section 200 and cover section 300 correctly algin (fully overlap). When the connection elements have a 2-fold rotation symmetry there are two possible orientations of the base/splice sections, and when the connection elements have a 4-fold rotation symmetry there are four possible orientations of the base/splice sections (as shown in Figures 5a and 5b).

In general, the n-fold rotational symmetry of the connection elements must be a factor of n-fold rotational symmetry of the shape of the perimeter of the outer peripheral walls 230,330. For example, if a regular octagon with 8-fold symmetry was used as the perimeter shape of the outer peripheral walls 230,330, a 2-fold, 4-fold, or 8-fold rotational symmetry of the connection elements could be used, allowing 2, 4 or 8 different orientations respectively of the base/splice sections. For a circular perimeter with infinite rotational symmetry, any number of rotationally symmetric connection elements with any order of rotation symmetry may be used.

As well as the above described rotation of the modules (base, splice and cover sections) of the fiber optic outlet 100 improving adaptability, whilst also retaining correct orientation of the cover section 400 when installed, the modular nature of the fiber optic outlet 100 also provides further advantages.

Firstly, the fiber optic outlet 100 may be used with different arrangements to that shown in Figures 1a and 1b. Namely, in some embodiments, the fiber optic outlet 100 may include more one or more additional splice sections, in addition to the splice section 300. These one or more additional splice sections can be connected between the base section and the cover section together with the splice section 300. In other words, the splice section 300 and one or more additional splice sections can stack together, with the multiple splice sections coupled to the base section 200 in a stack, with the cover section 400 coupled to the upper most splice section of the stack. This is made possible by the second plurality of connection elements 310 of the splice section 300 being configured for receiving an additional splice section as well as being configured to receive the cover section 400. Moreover, each additional splice section is configured for receiving the cover section 400. In one embodiment, the additional splice sections may be identical to the splice section 300, allowing any number of splice sections to be inserted between the base section 200 and the cover section 400. Having multiple splice sections provides further adaptability, allowing additional fiber optic connections to be made via additional fiber optic adapters.

In general, whilst it is necessary to start installation with the base section 200, any module with compatible connection elements can be attached to it later. For example, just a cover section 400 can be attached to the base section 200 (as discussed in Figure 6 below), or one or more splice sections 300 and then a cover section 400, or potentially further modules (sections) could be coupled to the base section 200, such as other modules that could be developed depending on future needs. The modular nature of the fiber optic outlet 100 means that modules can also be swapped between already installed base sections 200, or modules can be modified years after initial installation, or expanded with new modules developed later having different designs and providing different functionalities. Therefore the modular nature of the fiber optic outlet 100 allows for upgrading and development of the fiber optic outlet.

Figure 6 shows another arrangement of the modular fiber optic outlet 100 including just the base section 200 and the cover section 400. Such an arrangement is possible because the plurality of connection elements 206 of the base section are also configured for receiving the cover section 400. In other words, the plurality of connection elements 206 are configured to couple with the plurality of connection elements 402 of the cover section 400, as well as with the first plurality of connection elements 308 of the splice section 300. The base section 200 and the cover section 400 coupled in this way form a closed box, i.e. fully enclose the volume within the fiber optic outlet 100.

The arrangement shown in Figure 6 may be used as a fiber optic wall outlet without the splice section 300 either by using pre-connectorized optical fibers in the fiber optic feeder cable 500 that connect to fiber optic adapters 560 in an adapter mount area 240 of the base section 200, or alternatively by splicing the optical fibers in the fiber optic feeder cable 500 to fiber optic connectors 562 via a splicing area in the base section 200. Using the arrangement shown in Figure 6, without the splice section 300, results in a fiber optic outlet 100 that is up to 50% smaller.

Moreover, the arrangement shown in Figure 6 provides additional advantages during installation of the fiber optic wall outlet 100 that includes the splice section 300. When fiber optic feeder cables (such as fiber optic cable 500) are laid, for example, during construction of a building, a worker (first person), who typically does not have experience in fiber optic splicing, can install the arrangement shown in Figure 6 including just the base section 200 and the cover section 400 and position the incoming fiber optic feeder cable 500 in the base section 200. In other words, the worker can mount the base section 200 to a wall or DIN rail or the like via the one or more mounting elements 204, insert the fiber optic feeder cable 500 through the inlet 202 into the base section 200, and then, if desired, couple the cover section 400 to the base section 200, as shown in Figure 6. The worker can install the base section 200, fiber optic feeder cable 500 and cover section 400 as described above without any advanced fiber optics knowledge, such as knowledge of connectorizing or splicing of the optical fibers. After the base section 200 has been mounted, and the fiber optic cable 500 positioned within the base section, the worker can close the base section 200 with the cover section 400 cover and leave the fiber optic outlet ready for future connection. As discussed previously, the base section 200 may be mounted (installed) directly on a wall, or on flush-mounted boxes or on DIN rails including those inside a fiber optic cabinets.

When a connection is to be made to the fiber optic network, for example, when an end-user orders an internet connection, the internet provider can return to the base section 200 mounted on the wall to complete the set up of the fiber optic outlet 100. A fiber optic technician (second person) with advanced fiber optics knowledge (such as knowledge of connectorizing or splicing of optical fibers) can bring the splice section 300 of the fiber optic wall outlet 100 to the site. The technician can remove the cover section 400 if this was coupled to the base section 200 by the original worker, or alternatively may bring a cover section 400 along with the splice section 300. The technician can then perform splicing of the one or more optical fibers from the fiber optic cable 500 with the one or more fiber optic connectors 552/fiber optic pigtails 554, and connect these to fiber optic adapters 550 installed in the adapter mount area 304 of the splice section 300. The technician can then couple the splice section 300 onto the base section 200, and couple the cover section 400 onto the splice section 300, to complete the fully installed fiber optic outlet 100 as shown in Figure 1a with the fiber optic connections installed also. The fiber optic wall outlet 100 is then ready for the customer to plug their fiber optic connectors 600 into the fiber optic adapters 550 in order to connect to the network.

The above described method of installation of the fiber optic outlet 100 has a number of advantages that optimize the installation process and decreases costs due to a shorter installation time.

Firstly, only two components need to be initially purchased by the internet service provider/constructor of the building: the base section 200 and cover section 400, which are typically cheap plastic components and do not include more expensive fiber optical elements such as pigtails or adapters. This base section 200 and cover section 400 may then be installed as shown in Figure 6 by any worker, including those without fiber optic experience. This results in a lower cost for the initial installation, as a more expensive fiber optics trained technician is not needed. Furthermore, as only the base section 200 and cover section 400 are needed at this stage, the supplier of the fiber optic outlet 100 can ship the product without the splice section 300, making it both cheaper initially and up to 50% thinner.

Moreover, as during the initial stage only the cheaper base section 200 and cover section 400 have been installed, if any part is broken, for example during further construction work in the building, only this cheaper typically plastic component needs to be replaced.

Installation of the base section 200 and cover section 400 alone means that the internet service provider has the beginning of a modular network installed, ready for further development. No costs relating to the fiber optical components or the installation of these components are incurred until the end-user orders and internet service. Only when the end-user requests an internet connection is the more expensive fiber optic trained technician required. The internet service provider may at that point order the splice section 300 for installation, thus deferring costs. Moreover, the splice section 300 can be provided/sold to the internet provider with fiber optic adapters 550 already installed in the adapter mount area 304 and fiber optic pigtails 554 plugged into the adapters 500 and prepared for splicing, e.g. by stripping the ends of the pigtails 554. In other words, the splice tray can be sold with the fiber optic pigtails 554 and fiber optic connectors 552 connected to fiber optic adapters 550 pre-installed in the adapter mount area 304, as shown in Figures 3a and 3b. This means that the more expensive fiber optic technician only needs to take the splice module (splice section 300 and pre-installed pigtails 554) to the site and take off the cover section 400 from the base section 200. The technician is required to only strip the incoming fiber optic cable 500, which has already been installed in the base section, and then splice the optical fibers of the fiber optic cable 500 with the already pre-installed pigtails 554. The technician then simply needs to click the splice section 300 on to the base section, click the cover section 400 onto the splice section 300, and then plug in the customer fiber optic connector 600 on the outside of the fiber optic outlet 100 (into the fiber optic adapter 550) to form a connection to the network.

The highly trained technician does not need to spend any time mounting the base section 200 to the wall, such as drilling in the walls etc., or spend any time installing the incoming cable 500. Moreover, in the case that the splice section 300 is provided with the fiber optic pigtails 554 and adapters 550 pre-installed, the technician does not need to spend any time opening pigtails and manually installing them into the splice section 300, or spend any time stripping the pigtails.

The above described method of installation of the fiber optic outlet 100 therefore optimizes the installation process both in terms of cost, and in terms of saving resources by minimizing the amount of the highly trained fiber optic technician's time that is required.

In general, as mentioned above, various shapes may be used for the perimeter of base, splice and cover sections, and various different orders of rotational symmetry may be used for the connection elements and the perimeter shape (i.e. any n-fold rotational symmetry, where n is an integer).

The splice section 300 and the base section 200 may be configured to receive any number of fiber optic adapters. The fiber optic adapters may be received and held in the splice section 300 only, or in both the base section 200 and the splice section 300.

Any type of fiber optic adapters and connectors may be used the fiber optic outlet of the present invention. SC type connectors are shown for exemplary purposes in the drawings, however other types of connectors including but not limited to FC, LC, ST, and MTP/MPO type connectors may also be used, including both simplex and duplex type connectors.

Each section of the fiber optic outlet may be formed from plastic, metal, or any other suitable material. Preferably molded plastic is used. Each section be formed as a single (integral) piece, via molding for example, which allows for simplified manufacturing and results in a low manufacturing cost.

In some cases, the first person who mounts the base section 200 during the method of installation and the second person who persons the splicing may both be the same person, i.e. may both be the fiber optic technician.

The embodiments of the modular fiber optic outlet described herein have a number of advantages over existing outlets. Known outlets typically use a tray for the splicing area, which does not contain room for fiber optic adapters. Moreover, in order to enter known outlets with cables from different sides, the whole outlet assembly must be rotated, which results in instructions or branding being rotated. Lastly, known outlets typically include only four adapters and do not allow for further development introducing new modules.

In the present invention, on the other hand, the fiber optic outlet accommodates up to eight fiber optic adapters in the described embodiments, without an increase in the footprint of the outlet. Moreover, the modular invention allows for future expansions and modifications. For example, if new fiber optic connector types or the like are developed, new modules for the fiber optic outlet can be rapidly developed, and entirely new products can be created in response to customer demands. Provided these new modules have complimentary connection elements, they can be retrofitted to previous fiber optic outlets 100. Further, the above described rotatability of the modules mean that the fiber optic adapters can face any direction after installation, without instructions or branding on the cover section being rotated. Moreover, the feeder cable can always enter from any direction.

The present invention also allows cost savings to be made. Material costs can be reduced, as the fiber optic outlet can be provided with only the necessary modules for the given application (i.e. zero, one or more splice sections). The modular nature of the fiber optic outlet also allows for the above described two stage installation process, which requires skilled technicians to spend less time on site installing the fiber optic components. As discussed above, the splice section can be provided with factory installed pigtails already connected to factory installed adapters and prepared for splicing. This splice section with the fiber optic components factory prepared for splicing can be provided/sold as a separate product, making network development almost plug-and-play. The operator will be only required to take the cover section off the mounted base section, supply optical fibers from the feeder cable to the splice area and splice them to already-installed pigtails in the splice section, and then click the module onto the base section and click the cover section onto the splice section.

The fiber optic outlet of the present invention also provides more flexibility for service providers, as when a new FTTH installation is deployed without any end-users yet subscribed to the network service, the service providers need to purchase only the base section and cover section, which can be manufactures as cheap plastic components. These modules can be installed without any optical components being installed, and then later expanded by just ordering new module (such as the splice section) and clicking it in place.

Although described separately, the features of the embodiments outlined above may be combined in different ways where appropriate. Various modifications to the embodiments described above are possible and will occur to those skilled in the art without departing from the scope of the invention which is defined by the following claims.

## Claims

1. A modular fiber optic outlet (100) comprising a base section (200), a splice section (300), and a cover section (400), wherein:
the base section (200) comprises:
a first side including one or more mounting elements (204);
a second side opposing the first side, said second side comprising a plurality of connection elements (206) configured for receiving the splice section (300); and
an inlet (202) for receiving a fiber optic cable (500);
the splice section (300) comprises:
a first side comprising a first plurality of connection elements (308) configured for coupling to the base section (200);
a second side opposing the first side, said second side comprising a second plurality of connection elements (310) configured for receiving the cover section (400);
an adapter mount area (304) configured for receiving one or more fiber optic adapters (550); and
a splicing area (302);
and wherein the first plurality of connection elements (308) of the splice section (300) are configured to couple to the plurality of connection elements (206) of the base section (200) in two or more configurations, each configuration having a different orientation between the splice section (300) and the base section (200).

2. The modular fiber optic outlet (100) of claim 1, wherein:
the cover section (400) comprises a first side having plurality of connection elements (402) configured for coupling to the splice section (300); and
the plurality of connection elements (402) of the cover section (400) are configured to couple to the second plurality of connection elements (310) of the splice section (300) in two or more configurations, each configuration having a different orientation between the cover section (400) and the splice section (300).

3. The modular fiber optic outlet (100) of claims 1 or 2, wherein:
the plurality of connection elements (206) of the base section (200) and the first plurality of connection elements (308) of the splice section (300) each possess n-fold rotational symmetry about an axis normal to the respective side of that section; and/or
the second plurality of connection elements (310) of the splice section (300) and the plurality of connection elements (402) of the cover section (400) each possess n-fold rotational symmetry about an axis normal to the respective side of that section.

4. The modular fiber optic outlet (100) of any preceding claim, wherein:
the plurality of connection elements (206) of the base section (200) are also configured for receiving the cover section (400); and/or
the second plurality of connection elements (310) of the splice section (300) are also configured for receiving an additional splice section.

5. The modular fiber optic outlet (100) of any preceding claim, wherein the base section (200) and splice section (300) each include an outer peripheral wall (220,320) enclosing a volume between the first and second sides.

6. The modular fiber optic outlet (100) of claim 5, wherein the outer peripheral walls (220,320) of the base section (200) and the splice section (300) have the same shape perimeter, preferably a circular or rotationally symmetric polygon shape.

7. The modular fiber optic outlet (100) of claim 6, wherein the cover section (400) is planar and has the same shape perimeter as the outer peripheral walls (220,320) of the base section (200) and the splice section (300).

8. The modular fiber optic outlet (100) of any preceding claim, wherein:
the splice section (300) further comprises a partitioning wall (312) disposed between the first and second sides;
the splicing area (302) is disposed on the surface of the partitioning wall (312) towards the first side of the splice section (300);
the adapter mount area (304) is disposed on the surface of the partitioning wall (312) towards the second side of the splice section (300); and
the partitioning wall (312) includes one or more through-holes (314) for allowing one or more fiber optic cables to travel from the splicing area (302) to the adapter mount area (304).

9. The modular fiber optic outlet (100) of any preceding claim, wherein the splice section (300) further comprises one or more fiber optic pigtails (554) connected to fiber optic adapters (550) pre-installed in the adapter mount area (304).

10. The modular fiber optic outlet (100) of any preceding claim, wherein the base section (200) further comprises an adapter mount area (240) configured for receiving one or more fiber optic adapters (560).

11. The modular fiber optic outlet (100) of any preceding claim, wherein the base section (200) and/or splice section (300) include one or more cable guide elements (230,330) and/or cable retaining elements (332).

12. The modular fiber optic outlet (100) of any preceding claim, wherein the pluralities of connection elements (206,308,310,402) include one or more of: snap-fits, clips, screws, pins, shafts or bores.

13. A base section (200) for a modular fiber optic outlet (100), the base section (200) comprising:
a first side including one or more mounting elements (204);
a second side opposing the first side, said second side comprising a plurality of connection elements (206) configured for receiving a splice section (300) or a cover section (400);
an inlet (202) for receiving a fiber optic cable (500);
wherein the plurality of connection elements (206) are configured to couple to the splice section (300) or cover section (400) in two or more configurations, each configuration having a different orientation between the base section (200) and the splice section (300) or cover section (400).

14. A splice section (300) for a modular fiber optic outlet (100), the splice section (300) comprising:
a first side comprising a first plurality of connection elements (308) configured for coupling to a base section (200);
a second side opposing the first side, said second side comprising a second plurality of connection elements (310) configured for receiving a cover section (400) or an additional splice section;
an adapter mount area (304) suitable for receiving one or more fiber optic adapters (550); and
a splicing area (302);
wherein the first plurality of connection elements (308) are configured to couple to the base section (200) in two or more configurations, each configuration having a different orientation between the splice section (300) and the base section (200).

15. A method of installation of a modular fiber optic outlet (100) according to any of claims 1 to 12, the method comprising:
performing, by a first person, the steps of:
mounting the base section (200) onto a surface via the one or more mounting elements (204);
inserting a fiber optic cable (500) into the inlet (202) in the base section (200);
optionally, coupling the cover section (400) on to the base section (200);
performing, by the first person or by a second person, the steps of:
optionally, removing the cover section (400) from the base section (200);
splicing one or more optical fibers from the fiber optic cable (500) with one or more fiber optic pigtails (554) connected to fiber optic adapters (550) installed in the adapter mount area (304);
coupling the splice section (300) on to the base section (200); and
coupling the cover section (400) on to the splice section (300).
